# NEW EUROPEAN PATENT SPECIFICATION

(11) **EP 0 446 984 B2**
(45) Date of publication and mention of the opposition decision: **23.06.1999**
(45) Mention of the grant of the patent: 20.09.1995
(21) Application number: 91200444.7
(22) Date of filing: 01.03.1991
(51) Int. Cl.: B01D 1/18, A23C 1/04

(54) **Method and installation for drying fluids to give powders after spraying**
Verfahren und Anlage zur Trocknung von Flüssigkeiten zum Erhalten von Pulvern nach Versprühung
Procédé et installation de séchage de fluides pour obtenir des poudres après pulvérisation

(30) Priority: 02.03.1990 NL 9000497
(43) Date of publication of application: 18.09.1991
(73) Proprietor: Rotacom Industries B.V., 8414 LP Nieuwehorne (NL)
(72) Inventor: Slob, Wouter, NL-8414 LP Nieuwehorne (NL)
(74) Representative: de Bruijn, Leendert C.

(56) References cited:
- DE-A- 1 729 439
- DE-A- 2 549 847
- DK-B- 162 073
- US-A- 2 835 597
- US-A- 2 911 036
- US-A- 3 460 600
- US-A- 3 520 066
- US-A- 3 615 723
- US-A- 3 956 521
- US-A- 4 362 273
- wo 89/09372

## Description

The invention relates to a method for the preparation of powders, in which the starting material in the form of fluid concentrate is, in some way or other, sprayed in a first step in a hot first drying gas and is dried by the spray-dry principle, to give particles having a moisture content corresponding to the critical moisture content, which particles are further dried in a second step, using a second and cooler drying gas in accordance with the flow-through principle, to give the moisture content corresponding to the equilibrium moisture content, after which the product can be post-dried in a possible third step, using a third drying gas, to give the desired final moisture content.

The term powders comprises products which, during conventional drying, after spraying, are subject to product and quality losses, which can be influenced by the product temperature and the rate of drying during the drying path.

The concepts constant rate, falling rate and equilibrium rate as the three phases in the drying of particles are explained in more detail hereinafter.

The invention also relates to an installation for carrying out the method.

The following methods and installations are frequently encountered in the current state of the art:
A. Two-phase drying, in which the sprayed product is dried using a hot first drying gas to approximately the equilibrium moisture content and is then post-dried using a second drying gas, in, for example, a fluidised bed, as in US-A-3 956 521 (NL-A-7 413 829). The sprayed product dries in a spray chamber, in which the drying particles touch neither one another nor the walls and have reached the equilibrium moisture content after about 23 seconds, after which they leave the drying chamber and are post-dried, either via the cyclones or directly in a post-drying installation, such as, for example, a fluidised bed, to the desired final moisture content. In this two-phase drying, about 19 kg of drying gas are used per kg of solvent to be evaporated. The first drying gas thus serves for product drying in both the constant rate phase and the falling rate phase, only the falling rate phase being determining for the inlet/outlet temperature combination of the entire drying path through the constant rate phase and the falling rate phase.

Disadvantages of this method are:
The powder product quality is not optimum because the optimum (slow) drying rate is not complied with in the falling rate phase and the product temperature is also unnecessarily high in this phase, as a result of which losses in quality occur, such as solubility, colouring power, emulsifying action, crushing volume, etc.

The energy consumption is high, because it is necessary to work with large amounts of fairly cold drying gas in connection with the quality requirements, which can only be influenced in the falling rate phase, while the building size demands a fairly large driving force between outlet drying gas residual moisture/product equilibrium moisture content, so that the outlet drying gas has only a low residual moisture at a high outlet gas temperature, which combination is very far removed from an equilibrium condition desired from an energy standpoint.
B. Modified two-phase drier in accordance with DE-A-1729439, in which a first drying gas serves for evaporation in the constant rate and the falling rate phase and a second drying gas ensures fluid evaporation in the equilibrium phase.
The particular method, introduced for reasons of energy saving, is that some of the drying does not take place in the spraying chamber but the product is collected with a residual moisture content of about 13% on a screen belt, on which the product remains and forms a porous layer permeable to the drying gas, while all or the bulk of the drying gas is drawn through this porous layer and the screen belt and removed.
The porous layer is further dried by the drying air passing through, in accordance with the flow-through principle, to a moisture content corresponding to the equilibrium moisture content and is transported by means of the screen belt to a subsequent drying chamber for post-drying to the desired final moisture content.
By applying this method, the spray chamber can be made smaller and less first drying gas can suffice, which drying gas is also cooled, as a result of the long residence time of the product in the porous layer, to a lower outlet gas temperature and a higher residual moisture.
The drying gas required is about 14 kg per kg of evaporation.
The residence time in the drying chamber above the porous layer is about 14 seconds.
The disadvantages of this method are:
The product must be dried in the spray drier section to far into the falling rate phase, since the input moisture content in the post-drying compartment must be so low that the fresh drying air does not give rise to case hardening. The maximum moisture content must be approximately the moisture content associated with the equilibrium moisture content.

Since the product is dried with a single type of drying gas in the constant rate and falling rate phase, while the residence time of the product in the falling rate phase is very long, the product must be deposited on the porous layer with a moisture content at which no further denaturing can occur. As a result, the product must be dried in the spray-dry section to far into the falling rate phase.

There is thus a residual energy advantage because, due to a longer residence time, a better equilibrium can be found between the residual moisture content of the waste air and the moisture content of the product. However, this advantage which arises and is caused by the long residence time is offset by the restrictions on the inlet temperature of the drying gas.

On grounds of product quality, the wet-ball temperature (= the minimum product temperature) must also be sufficiently low to prevent denaturing during the very long residence time in the flow-through section during the remainder of the falling rate phase. The wet-ball temperature is a function of the inlet drying gas temperature. Thus, on these grounds also, a restricted inlet drying gas temperature can be chosen. In practice, the inlet drying gas temperature is found to be equal to or somewhat lower than the inlet drying gas temperature for a two-phase drier.
C. Three-phase drying, in accordance with US-A-4,362,273, in which, for reasons of product quality, two types of gas are admitted into the drying tower for drying the product to approximately the equilibrium moisture content (and optionally a third gas for post-drying).
The two gases admitted into the drying tower are:
A hot drying gas essentially for evaporation in the constant rate phase.
A cold drying gas, fed into the drying tower at the top and mixed with the drying gas after the constant rate phase drying with which the drying in the quality-determining falling rate phase tees place.

The advantage of this method is a very good product quality. Disadvantages are an appreciably greater energy consumption and larger dimensions of the spray chamber, determined by a residence time of > 23 seconds and the requirement of, in total, about 25 kg of drying gas per kg of moisture to be evaporated.

Given the fact that the abovementioned methods belong to the current state of the art, it can be stated that it is still the case that an optimum powder quality cannot be achieved other than with significant expenditure on energy costs and with the use of large spray chambers.

The object of the present invention is to improve drying fluid concentrates. This object is achieved by providing a method according to claim 1 and an installation according to claim 9.

By application of the new method it has been found to be possible to substantially improve this situation, by achieving an optimum product quality with a substantially reduced energy consumption and also reducing the space requirements for the drying.

With the new method, the evaporation process is divided into at least two parts:
a spray-drying for the constant rate phase using a hot first drying gas entirely suited for drying in this first phase only,
a flow-through drying for the falling rate phase, using a second drying gas, which can be arbitrarily chosen and is entirely suited for drying in this second phase,
(and, if appropriate, a post-drying using a fresh drying gas suited for the equilibrium phase drying).

A particular feature in this new method is the strict division of tasks of the three drying gases, which are made up independently of one another, and the use of large amounts of cooler, second drying gas as a constituent of the drying gas for the second phase.

The effect of large amounts of cool drying gas was surprising to experts and accepted as established only after a number of measurements.

In drying practice the admission of a cool gas during drying has always been avoided in order to prevent energy loss.

In the new method, spray-drying of the concentrate during the constant rate phase is carried out by means of a hot first drying gas which, at the end of said phase, has a very high residual moisture content and cannot dry the product further. The partially dried product is now collected on a screen, which is permeable to gas and on which the product forms a porous layer permeable to a drying gas, the drying gas flowing through this layer and flowing via the screen to the outlet (outlets). The layer through which the gas flows is further dried, in flow-through drying, to equilibrium.

For drying at the correct rate and at an adequately low product temperature in this flow-through section, a second drying gas is used which is composed of the exhausted first drying gas and a freshly added drying gas, the inlet temperature and the amount of which determine the desired product temperature, which is determined by the wet-ball temperature of the mixed drying gas and the initial residual moisture content of the drying gas.

The effects on the product quality are very favourable. As a consequence of the application of drying at a low product temperature, specifically in the falling rate phase, and the relatively very long time which is available for drying in the flow-through section, a significant gain in quality is achieved for the majority of products, there also being a large energy advantage, and it being possible both to set a desired product temperature and a desired low drying speed.

In addition, the space requirement for the spray chamber is substantially smaller; this is now determined by the maximum residence time of the product in the spray chamber of 5 seconds and a first drying gas amount of about 6.5 kg per kg of drier capacity.

### Backgrounds to the drying process.

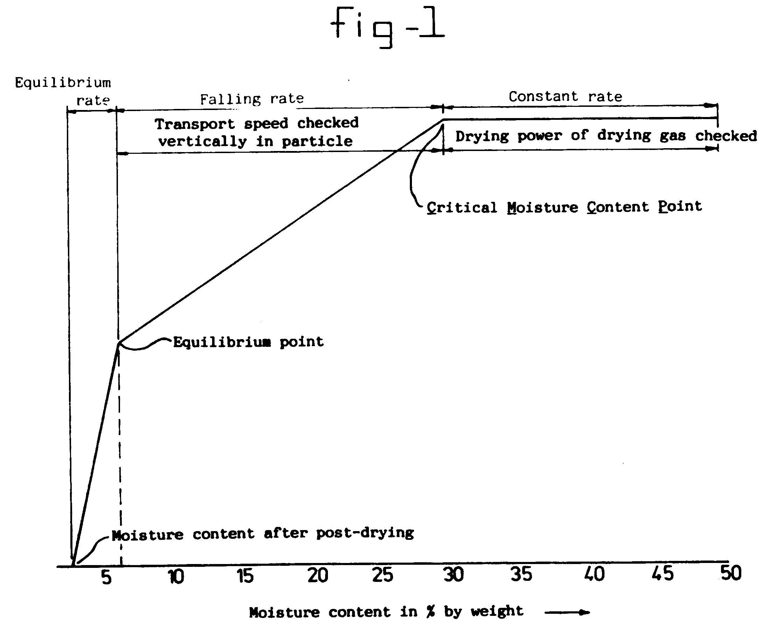

The drying of a sprayed particle proceeds in three phases, as shown in Fig. 1.

A constant rate phase, in which the rate of evaporation is not linked to the moisture content of the particle but only to the drying power of the drying gas, essentially determined by the difference in vapour pressure of the drying air and that in the particle, which latter is dependent on the particle temperature.

The falling rate phase, in which the rate of evaporation is subject to limits and is lower the lower the moisture content of the particle, passing into
the equilibrium phase, in which the particle is free from non-bound moisture and goes to an equilibrium moisture content determined by the vapour pressure of the surrounding gas.

The transition point between the falling rate phase and the equilibrium is the equilibrium point; this point is interpreted somewhat more broadly in the description of the new drying method.

The transition point between constant rate and falling rate is the critical moisture content point, abbreviated as CMP.

This point also is interpreted somewhat more broadly in the description of the new drying method.

The moisture contents at CMP and equilibrium point are product-specific.

### Concluding remarks

By means of a product temperature which can be chosen to be low and a drying rate in the falling rate which can be chosen to be low, optimum product quality can be achieved without concessions in respect of energy consumption.

The new method is very suitable for the use of low-calorie heat, for example for the application of the total energy principle to the waste air fan drive.

An extremely low energy consumption also results if the new method and installation are used in an environment where sufficient low-calorie waste heat is available at about 50° C for use as pre-heating for the first drying air in spraying and as a heat source for the second and third drying gases to be added. (In this context we are thinking of an evaporator/drier combination process in which water of condensation and/or condensate is used for heating the air for the drier). Another advantage of the new method and installation results from the very high residual moisture content of the outlet gas, as a result of which (partial) condensation with a view to the separation of substances, such as solvents and/or odours, from the outlet gas is possible in a simple manner and no cyclones are needed, but a simple wet scrubber can suffice to meet the most stringent environmental requirements relating to the outlet gases.

Finally, it must be regarded as striking that the new method and installation lead to very much smaller dimensions of the building, the reductions in volume being very much larger than 50% compared with installations in accordance with the current state of the art.
For example:
Powder tower for the production of 500 kg of skimmed milk powder per hour:

| Single-phase drying | |
|---|---|
| Cylinder diameter | 6 metres |
| Cylinder height | 6 metres |
| Cone height | 6 metres |
| Building size | 15 x 10 x 16 metres high, i.e. 2,400 m³ |

| New drier: | |
|---|---|
| Ground area is | 3 x 2 metres |
| Height | 4 metres |
| Building size | 10 x 5 x 6 metres high, i.e. 300 m³ |

### Description of the new installation

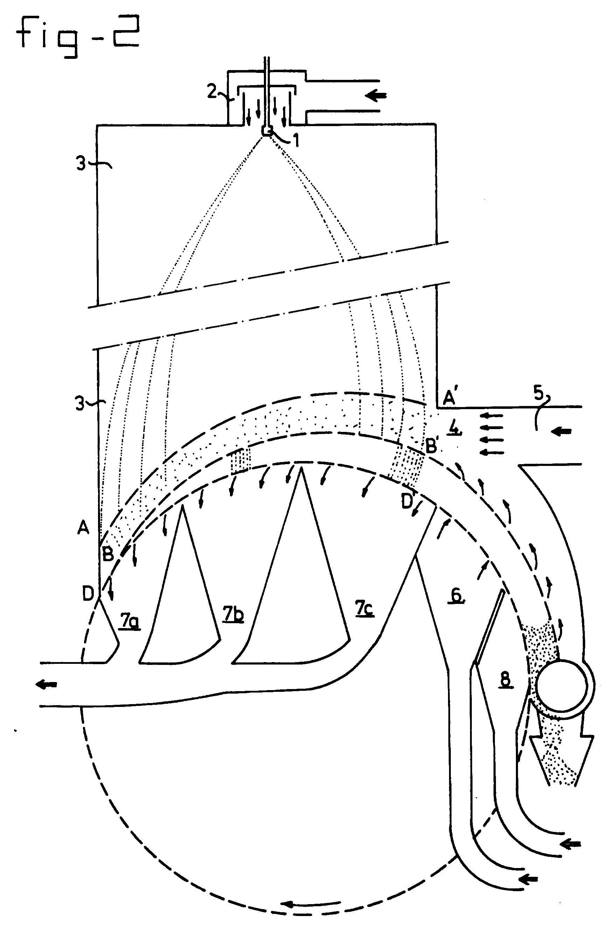

Fig. 2 is an example of the construction of an installation for the new method.

### First step: spray-drying

The fluid (1) to be dried is sprayed in some way or other into a hot jet of drying gas (2) in a spray-drier section (3).

The sprayed particles and the drying gas move in virtually the same direction (co-current drier).

The spray-drier section passes at A-A' into a mixing region for two types of drying gas.

At this transition location, the following conditions of drying product and drying gas prevail: (before mixing starts).

The solids content of the product is approximately equal to the content, for example 60%, at the CMP.

The vapour pressure in the drying gas has become virtually the same as the surface vapour pressure of the particle, so that the drying gas has a very high residual moisture content and a low dry-ball temperature.

In order to maintain these conditions, the inlet temperature of this drying gas (2) is controlled in accordance with the amount of fluid to be evaporated which is added.

The amount of drying gas (2) is in principle kept at a constant value by means of the adjustable, but constant, capacity of the feed fan(s).

The inlet temperature is controlled as a function of the residual moisture content of the exhausted first drying gas.

### Second step: flow-through drying

A fairly large amount of fresh drying gas (4) is drawn into the mixing region (A-A'/B-B') vertically or virtually vertically to the direction of flow of drying gas (2) and product when passing through the first phase. This can be effected from several directions.

Partly as a result of the fairly high speed of this incoming dry gas, a complete or virtually complete mixing with the exhausted drying gas from the first phase occurs.

This mixing takes place mainly in the air mixing layer between A-A' and B-B'.

The amount of drying gas (4) is so chosen that, after mixing with drying gas (2), a specific desired wet-ball temperature results, a larger amount of drying gas (4) leading to a lower wet-ball temperature.

The drying power of the said drying gas also depends on its relative humidity. By adjusting the temperature of the drying gas (4) freshly introduced, this relative humidity of the mixing gas is brought to the desired value.

The drying gas produced by mixing is then drawn through perforation D-D', the product, which remains behind, forming a porous layer B-B'/D-D' permeable to the drying air. Under the influence of the mixed drying gas in the entire region A-A'/D-D' the product cools to the new wet-ball temperature and moisture is released into the drying gas, as a result of which this gas thus becomes more moist and its temperature is lowered. In this way, the further drying takes place until the product has reached the solids content of the equilibrium phase and the falling rate has gone to completion.

### Third step: equilibrium drying:

The product which has passed through the flow-through drying of the second phase can now be post-dried in another flow-through drying section. Here a fresh drying gas (6) with a high drying power is again added.

This drying gas has a low residual moisture content and a temperature of 20-70° C. In this third drying phase the product assumes the dry-ball temperature of the drying gas used here. (The waste gas (6) from this drying can be used directly as admix gas for the second phase; the moisture uptake in the third phase is low, so that the temperature of the gas is still high enough and the moisture content low enough to be used as part of the dry gas to be admixed for the abovementioned second phase).

The optional product cooling after the third phase has gone to completion can also take place in a flow-through section. In this case also, the waste gas (8), which is warmed by the cooled product, can usefully be used as a constituent of the amount of drying gas (4) to be admixed for the second phase.

The exhausted gas from the first, the second and, insofar as desired, also the third cooling phase is drawn off below the perforation via so-called waste air compartments (7a, 7b, 7c), connected to a central suction unit. Mutual distribution of the amounts of drying gas drawn off per compartment can be effected simply by means of (manually adjustable) channel resistances per compartment.

This is important for the adjustment, which may be necessary, of the mixing process of the drying gas types (2) and (4) above the porous layer.

In the case of process control of the new installation it is important that once a mixing ratio between the amounts of first drying gas (2) and added second drying gas (4) has been chosen, this ratio is maintained.

Assuming a fixed amount of hot drying gas (2), it is necessary only to adjust to a constant amount of total gas to be removed and to maintain this value automatically by means of the discharge valve(s).

The temperature control of the total amount of drying gas (4) to be admixed takes place via measurement of the temperature on entering the mixing layer and adding the desired amount of heat to the drying gas (4). In this operation exhausted drying gas which may have originated from the abovementioned third drying phase and/or the cooling is carried over, with the heat absorbed therein, so that the fresh gas (5) still required to make up to the total amount of drying gas (4) is provided with the thermal energy which is still lacking.

By measuring the wet-ball temperature of the gas in the waste air compartments below the flow-through drying sections and using the measured value for adjustment of the temperature of the drying gas (4) to be admixed, the drying process can be controlled automatically in the flow-through drier section.

The spray-drying section can be controlled automatically by the abovementioned modifications of the inlet air temperature in accordance with the changes which occur in the amount of fluid supplied, which is to be evaporated, by measuring the residual moisture content of the exhausted drying gas (2) close to the gas mixing layer.

### Tests

A series of tests were carried out in a test drier constructed specifically for this purpose.

The drying chamber has a height of 1.80 metres above the perforated drum and is also 1 x 1 metre in the horizontal plane. The drum has a diameter of 1.5 metres.

The size of the perforations was found not to be very critical and can be very many times greater than the particle diameter without any problems and without particles passing through.

The drying gas for the mixture for the flow-through section for the falling rate phase was supplied at (4) and the side opposite hereto.

The post-drying took place using tertiary drying air which flowed from below through the perforated drum and the porous layer. The tertiary air was then mixed with the secondary air at (4), while this mixture was further mixed with primary air in layer AA'/BB'.

| | Test 1 | Test 2 |
|---|---|---|
| Skimmed milk concentrate | 45% | 47% |
| Inlet temperature of primary air | 226°C | 400°C |
| Amount of primary air | 800 kg | 800 kg |
| Dry-ball temperature of primary off-gas | 49°C | 52°C |
| Relative humidity | 100% | 100% |
| Product solids content above mixing layer | 59% | 61% |
| Inlet temperature of secondary drying air | 8°C | 10°C |
| Relative humidity | 20% | 75% |
| Product solids content after 1st flow-through | 91% | 89% |
| Waste air temperature 7a | 28°C | 25°C |
| Waste air temperature 7b | 36°C | 29°C |
| Waste air temperature 7c | 32°C | 27°C |
| Total waste air | 13,200 kg | 18,000 kg |
| Dry-ball temperature of tertiary drying air | 50°C | 55°C |
| Final moisture content of product | 3.2% | 3.4% |
| Nozzle pressure | 35 bar | 50 bar |
| s.i. ADMI | < 0.1% | < 0.1% |
| Crushing volume | 730 | 745 |
| Specks soluble cold | none | none |

### Characteristic features are:

The very low nozzle pressure and thus a large particle does not influence the s.i., the crushing volume and the cold solubility.

The high inlet temperature (400°C) does not influence the powder quality.

The crushing volume is exceptionally high.

The good permeability of the porous layer.

110 mm difference in pressure for a 12 cm product layer. This is lower than when a fluidised bed is used for virtually dry powder. The high xt over the spray section 400-52° C.

The low temperature of the secondary air is striking. Drying after mixing cannot be explained by a Mollier diagram.

## Claims

1. Method for drying fluid concentrates, after spraying, to give a powder, which concentrates, as drying progresses, display a so-called critical moisture content point CMP, this being a solids content above which "case hardening" or cornification occurs if drying is too rapid, and which concentrates, during drying at certain solids contents of the concentrates, are subject to denaturing, this denaturing being the greater the higher the temperature which then arises and the longer the residence time in the region, in which method the fluid to be dried is sprayed in a hot first drying gas and dried until a specific average solids contents has been reached in a first drying step, after which, by means of a second, freshly supplied drying gas, and after mixing with the first drying gas, the drying of the product is continued in a second drying step, in which the drying is continued to the equilibrium point, a solids content above which the product is not subject to case hardening and denaturing, after which, in an optional third drying step, the drying of the powder to the final moisture content can take place using a third freshly supplied drying gas, and in which method the sprayed product, which first travels a path which is on average virtually vertical, under the influence of drying gas and gravity, is collected after a certain time on a porous screen element, the drying gas, which at that time surrounds the product, being completely or substantially drawn through the screen element and transported to a gas outlet, while the drying product forms a porous layer during this operation, which porous layer is further dried by the gas passing the porous layer and the screen element, the porous layer being moved, by moving the porous screen element, to outside the flowed-through section and, finally, being separated from the screen element and removed, wherein it is ensured that:
a) the inlet temperature and the amount of the first drying gas are so chosen that the product to be dried acquires, as a result of drying with said first drying gas, a moisture content which is approximately equal to the critical moisture content point CMP, the inlet temperature of the first drying gas being chosen between 125°C and 750°C,
b) the inlet temperature and the amount of the first drying gas are adapted only for the drying of the product to virtually the CMP and are not adapted for drying the product at moisture contents lower than the CMP,
c) the exhausted first drying gas is mixed with an amount of second drying gas which is at most 30 times larger than the amount of first drying gas in a mixing layer, close above the porous layer on the screen element, in which mixing layer the two drying gases and the product are subject to a virtually complete mixing,
d) the wet-ball temperature of the mixed drying gas, formed by the first and the second added drying gas, is adjusted to the drying requirements for the product having moisture contents lower than the CMP, by means of such an amount of the second added drying gas that the wet-ball temperature of the mixed drying gas is at least 3°C and at most 100°C lower than the wet-ball temperature of the first drying gas,
e) the drying of the product from spraying to a solids content corresponding to the equilibrium point takes place in two adjacent drying sections which pass one into the other and are integrated to a whole, said drying sections being a spray-drying section and a flow-through drying section, using two drying gases specially adapted to the drying requirements of the product in each of the sections, the spray-drying section serving for drying the product to the CMP and the flow-through section for drying the product between CMP and equilibrium point, the mixing layer forming part of the flow-through section,
f) the first drying gas consists of air, inert gas or superheated steam, and
g) the second drying gas consists of air, inert gas or superheated steam.

2. Method according to Claim 1, for the preparation, with a reduced energy consumption, of powders from liquid concentrates, characterised in that the reduced energy consumption is generated in that, in the first drying step, spray drying is used with a drying gas suitable for this purpose and with which the product is dried to virtually the CMP, while in the second drying step flow-through drying is used with a second drying gas suitable for this purpose, the drying gas for the first step not being suitable for drying in the second step, while the outlet gas conditions are determined by the flow-through drying process in the second step.

3. Method according to Claim 1, for the preparation of powders, which are not denatured or are barely denatured, from fluid concentrates, characterised in that the low degree of denaturing results from the fact that, in the first drying step, spray-drying is used with a drying gas suitable for this purpose, with which the product is dried to virtually the CMP, while in the second drying step flow-through drying takes place with a second drying gas suitable for this purpose, the drying in the flow-through drier extending over a longer period and thus can take place at a lower temperature and a higher moisture content of the drying air, while the drying gas for the first step is not suitable for drying in the second step.

4. Method according to Claim 1, for the preparation of crystallised powders from fluid concentrates, characterised in that the increased degree of crystallization results from the fact that, in the first step, spray-drying takes place with a drying gas suitable for this purpose, with which the product is dried to virtually the CMP, while in the second step flow-through drying takes place with a second drying gas suitable for this purpose, as a result of which drying in the second step takes place at a low temperature and a high moisture content of the drying air and over a longer period, while the drying gas for the first step is not suitable for drying in the second step.

5. Method according to Claim 1, for the preparation of powders having a low fines content, characterised in that the fines content is low because, in the first drying step, spray-drying takes place with a drying gas suitable for this purpose, with which the product is dried to a moisture content virtually identical to the CMP, while in the second drying step flow-through drying takes place with a drying gas suitable for this purpose and suitable for drying the product at a slow rate at a lower temperature, while the first drying gas is not suitable for drying in the second step.

6. Method according to Claim 1, for the preparation of powders from fluid concentrates, with the aim of forming agglomerates, characterised in that the addition of substances to be agglomerated takes place substantially together with the addition of the second drying gas in the second drying step, where flow-through drying takes place with a drying gas suitable for this purpose, while the concentrate to be sprayed is dried, in the first drying step, in a spray-drying installation with a first drying gas suitable for this purpose, with which the product is dried to virtually the CMP, while the first drying gas is not suitable for drying in the second step.

7. Method according to Claim 1, for the preparation of powders having a high crushing volume from fluid concentrates, characterised in that the high crushing volume results from the fact that, in the first drying step, spray-drying takes place with a drying gas suitable for this purpose, with which the product is dried to a moisture content virtually identical to the CMP, while in the second drying step flow-through drying takes place with a drying gas suitable for this purpose, by which means the drying in the second step is greatly moderated and, consequently, hardly any vacuoles can form in the product, as a result of which a high crushing volume is obtained for the prepared powder.

8. Method according to Claim 1, for the preparation of powders from concentrates, in which method condensable gases, originating from the fluid concentrate, must be completely or partially recovered from the outlet gas, characterised in that the outlet gas, consisting of a composition of exhausted drying gases from the first drying step, the second drying step, the optional third drying step for post-drying and a cooling step for product cooling, by use in the second drying step is cooled to a low temperature and has a high moisture content, as a result of which it can be cooled simply and inexpensively to below the dew point, after which the substances to be recovered can be obtained from the condensate.

9. Installation for carrying out the method according to claims 1 to 8, characterised in that the installation comprises a spray-drying section (3) for spraying fluid concentrates, the installation further comprising:
a) a first inlet (2) for the first drying gas, the spray drying section and the first inlet being arranged such that the sprayed fluid concentrates travel a path which is on the average virtually vertical;
b) a flow-through drying section which forms an integrated whole with the spray-drying section, in which the two sections pass into one another, the flow-through section being placed in the vertical path of fluid travel;
c) a second inlet (5) for introducing the second drying gas into the flow-through drying section;
d) a curved or plane porous screen element provided below the second inlet and in the flow-through section for collecting the sprayed product, the screen element being movable out of the flow-through section and the upper surface of the screen element being parallel to the direction of flow of the gas introduced by the second inlet;
e) a gas outlet for removing the used first and second drying gases drawn through the screen element and placed vertically below the flow-through section, in line with the spray drying section; and
f) a wet scrubber for purifying the gases removed by the gas outlet.

## Patentansprüche

1. Verfahren zum Trocknen von fluiden Konzentraten, um ein Pulver nach Versprühen zu erhalten, wobei die Konzentrate bei fortschreitender Trocknung einen sogenannten kritischen Feuchtigkeitsgehaltspunkt CMP aufweisen, wobei dieser einen Feststoffanteil darstellt, bei dem oberhalb desselben bei zu schneller Trocknung "Verhärtung" oder Verkörnung auftritt, und wobei die Konzentrate während der Trocknung bei bestimmten Feststoffgehalten der Konzentrate einer Denaturierung unterworfen werden, wobei diese umso größer ist, je höher die sich einstellende Temperatur und je länger die Verweilzeit in dieser Region ist, bei dem das zu trocknende Fluid in ein erstes heißes Trocknungsgas gesprüht und getrocknet wird, bis ein spezifischer durchschnittlicher Feststoffgehalt in einem ersten Trocknungsschritt erreicht worden ist, nach dem anschließend mittels eines zweiten Frischzufuhr-Trocknungsgases nach Mischen mit dem ersten Trocknungsgas die Trocknung des Produkts in einem zweiten Trocknungsschritt fortgesetzt wird, bei dem die Trocknung bis zum Gleichgewichtspunkt fortgesetzt wird, einem Feststoffgehalt, bei dem oberhalb dieses Punktes das Produkt keiner Verhärtung oder Denaturierung unterworfen ist, wobei anschließend in einem optionalen dritten Trocknungsschritt die Trocknung des Pulvers zum Endfeuchtigkeitsgehalt unter Verwendung eines frisch zugeführten Trocknungsgases durchführbar ist und das versprühte Produkt, das zuerst einen Weg zurücklegt, der im Durchschnitt nahezu vertikal ist, unter dem Einfluß des Trocknungsgases und der Schwerkraft nach einer bestimmten Zeit auf einem porösen Siebelement gesammelt wird, wobei das Trocknungsgas, das zu dieser Zeit das Produkt umgibt, vollständig oder nahezu vollständig durch das Siebelement geführt und zu einem Gasauslaß transportiert wird, während das Trocknungsprodukt eine poröse Schicht während dieses Vorganges bildet, wobei die poröse Schicht weiterhin getrocknet wird, indem das Gas durch die poröse Schicht und das Siebelement geschickt wird, wobei die poröse Schicht durch Bewegen des porösen Siebelementes an die Außenseite der Durchströmungssektion bewegt und schließlich vom Siebelement getrennt und entfernt wird, wobei sichergestellt ist, daß:
a) die Einlaßtemperatur und die Menge des ersten Trocknungsgases so gewählt sind, daß das zu trocknende Produkt als Ergebnis der Trocknung mit dem ersten Trocknungsgas einen Feuchtigkeitsgehalt erhält, der annähernd gleich dem des kritischen Feuchtigkeitsgehaltspunktes (CMP) ist, wobei die Einlaßtemperatur des ersten Trocknungsgases zwischen 125 °C urd 750°C gewählt ist,
b) die Einlaßtemperatur und die Menge des ersten Trocknungsgases eingestellt sind, um nur das Produkt bis nahezu zum CMP zu trocknen und nicht eingestellt sind, um das Produkt mit Feuchtigkeitsgehalten kleiner CMP zu trocknen,
c) das verbrauchte erste Trocknungsgas mit einer Menge eines zweiten Trocknungsgases, die bis zu 30 mal größer als die Menge des ersten Trocknungsgases ist, in einer Mischschicht nahe oberhalb der porösen Schicht des Siebelementes gemischt wird, wobei die zwei Trocknungsgase und das Produkt in dieser Mischschicht nahezu vollständig gemischt werden,
d) die Feuchtkugeltemperatur des gemischten Trocknungsgases, das durch das erste und das zweite dazugegebene Trocknungsgas gebildet wird, auf die Trocknungsanforderungen für das Produkt mit Feuchtigkeitsanteilen kleiner als die des CMPs mittels einer derartigen Menge des zweiten dazugegebenen Trocknungsgases eingestellt wird, daß die Feuchtkugeltemperatur des gemischten Trocknungsgases wenigstens 3°C und höchstens 100°C kleiner als die Feuchtkugeltemperatur des ersten Trocknungsgases ist,
e) das Trocknen des Versprühungsproduktes auf einen dem Gleichgewichtspunkt entsprechenden Feststoffanteil in zwei aneinanderliegenden Trocknungssektionen stattfindet, die ineinander übergehen und zu einem Ganzen zusammengefaßt sind, wobei die Trocknungssektionen eine Sprühtrocknungs- und eine Durchflußtrocknungssektion darstellen, unter Verwendung zweier speziell den Trocknungsanforderungen des Produktes in jeder Sektion angepaßter Trocknungsgase, wobei die Sprühtrocknungssektion zum Trocknen des Produktes bis zum CMP und die Durchflußsektion zum Trocknen des Produktes zwischen CMP und Gleichgewichtspunkt dient und die Mischschicht einen Teil der Durchflußsektion bildet,
f) das erste Trocknungsgas aus Luft, Inertgas oder überhitztem Dampf besteht, und
g) das zweite Trocknungsgas aus Luft, Inertgas oder überhitztem Dampf besteht.

2. Verfahren nach Anspruch 1 für die Herstellung von Pulvern aus Flüssigkonzentraten mit einem verringerten Energieverbrauch, **dadurch gekennzeichnet, daß** der reduzierte Energieverbrauch dadurch erhalten wird, daß im ersten Trocknungsschritt Sprühtrocknung durchgeführt wird mit einem Trocknungsgas, das für diesen Zweck geeignet ist und mit dem das Produkt nahezu bis zum CMP getrocknet wird, während im zweiten Trocknungsschritt Durchflußtrocknung mit einem zweiten für diesen Zweck geeigneten Trocknungsgas angewendet wird, wobei das Trocknungsgas des ersten Schrittes nicht für die Trocknung im zweiten Schritt geeignet ist, während die Auslaßgasbedingungen durch den Durchflußtrocknungsprozeß im zweiten Schritt bestimmt sind.

3. Verfahren nach Anspruch 1 zur Herstellung von Pulvern, die nicht oder kaum denaturiert sind, aus Flüssigkeitskonzentraten, **dadurch gekennzeichnet, daß** der geringe Denaturierungsgrad daher rührt, daß im ersten Trocknungsschritt Sprühtrocknung mit einem für diesen Zweck geeigneten Trocknungsgas verwendet wird, mit dem das Produkt bis nahezu zum CMP getrocknet wird, während im zweiten Trocknungsschritt Durchflußtrocknung mit einem für diesen Zweck geeigneten Trocknungsgas stattfindet, wobei sich die Trocknung im Durchflußtrockner über einen längeren Zeitraum hinweg erstreckt, so daß diese bei einer geringeren Temperatur mit einem höheren Feuchtigkeitsgehalt der Trocknungsluft durchgeführt werden kann, während das Trocknungsgas für den ersten Schritt nicht zur Trocknung im zweiten Schritt geeignet ist.

4. Verfahren nach Anspruch 1 zur Herstellung von kristallisierten Pulvern aus Flüssigkeitskonzentraten, **dadurch gekennzeichnet, daß** der steigende Kristallisationsgrad daher rührt, daß im ersten Schritt Sprühtrocknung mit einem für diesen Zweck geeigneten Trocknungsgas stattfindet, mit dem das Produkt bis nahezu zum CMP getrocknet wird, während im zweiten Schritt Druchflußtrocknung mit einem für diesen Zweck geeigneten Trocknungsgas stattfindet und folglich die Trocknung im zweiten Schritt bei einer geringen Temperatur und einem hohen Feuchtigkeitsgehalt der Trocknungsluft und über einen längeren Zeitraum hinweg stattfindet, während das Trocknungsgas des ersten Schrittes nicht zur Trocknung im zweiten Schritt geeignet ist.

5. Verfahren nach Anspruch 1 zur Herstellung von Pulvern mit einem geringen Feinanteil, **dadurch gekennzeichnet, daß** der Feinanteil gering ist, da im ersten Trocknungsschritt Sprühtrocknung mit einem für diesen Zweck geeigneten Trocknungsgas stattfindet, mit dem das Produkt auf einen Feuchtigkeitsgehalt nahe dem CMP getrocknet wird, während im zweiten Trocknungsschritt Durchflußtrocknung mit einem für diesen Zweck und zur Trocknung des Produkts mit einer geringen Rate bei einer geringeren Temperatur geeigneten Trocknungsgas stattfindet, während das erste Trocknungsgas zur Trocknung im zweiten Schritt nicht geeignet ist.

6. Verfahren nach Anspruch 1 zur Herstellung von Pulvern aus Flüssigkeitskonzentraten, zum Bilden von Agglomeraten, **dadurch gekennzeichnet, daß** die Zugabe von zu agglomerierenden Substanzen im wesentlichen zusammen mit der Zugabe des zweiten Trocknungsgases im zweiten Trocknungsschritt stattfindet, bei dem mit einem für diesen Zweck geeigneten Trocknungsgas Durchflußtrocknung stattfindet, während das zu versprühende Konzentrat im ersten Trocknungsschritt in einer Sprühtrocknungsvorrichtung mit einem ersten für diesen Zweck geeigneten Trocknungsgas getrocknet wird , mit dem das Produkt nahezu bis zum CMP getrocknet wird, wobei das erste Trocknungsgas nicht zum Trocknen im zweiten Schritt geeignet ist.

7. Verfahren nach Anspruch 1 zur Herstellung von Pulvern mit einem hohen Zerkleinerungsvolumen aus fluiden Konzentraten, **dadurch gekennzeichnet, daß** das hohe Zerkleinerungsvolumen daher rührt, daß im ersten Trocknungsschritt Sprühtrocknung mit einem für diesen Zweck geeigneten Trocknungsgas stattfindet, mit dem das Produkt bis zu einem Feuchtigkeitsgehalt, der zumindest nahezu mit dem CMP identisch ist, getrocknet wird, während im zweiten Trocknungsschritt Durchflußtrocknung mit einem für diesen Zweck geeigneten Trocknungsgas stattfindet, wodurch die Trocknung im zweiten Schritt erheblich abgeschwächt wird und sich folglich kaum Vakuolen im Produkt bilden können und somit ein hohes Zerkleinerungsvolumen für das hergestellte Pulver erzielt wird.

8. Verfahren nach Anspruch 1 zur Herstellung von Pulvern aus Konzentraten, bei dem aus dem Fluidkonzentrat stammende kondensierbare Gase vollständig oder teilweise aus dem Auslaßgas wiedergewonnen werden müssen, **dadurch gekennzeichnet, daß** das Auslaßgas, das aus einer Mischung von verbrauchten Trocknungsgasen aus dem ersten Trocknungsschritt, dem zweiten Trocknungsschritt, dem optionalen dritten Trocknungsschritt für die Nachtrocknung und aus einem Kühlschritt zum Produktkühlen besteht, durch Verwendung im zweiten Trocknungsschritt auf eine niedrige Temperatur gekühlt wird und einen hohen Feuchtigkeitsgehalt aufweist, was dazu führt, daß dieses einfach gekühlt und kostengünstig unter den Taupunkt gebracht werden kann, wonach die wiederzugewinnenden Substanzen aus dem Kondensat erhalten werden können.

9. Vorrichtung zur Durchführung eines Verfahrens nach einem der Ansprüche 1 bis 8, **dadurch gekennzeichnet, daß** die Vorrichtung eine Sprühtrocknungssektion (3) zum Versprühen von fluiden Konzentraten aufweist, wobei die Vorrichtung weiterhin aufweist:
a) einen ersten Einlaß (2) für das erste Trocknungsgas, wobei die Sprühtrocknungssektion und der erste Einlaß so angebracht sind, daß die versprühten fluiden Konzentrate einen Weg zurücklegen, der im Mittel zumindest nahezu vertikal ist;
b) eine Durchflußtrocknungssektion, die ein integriertes Ganzes mit der Sprühtrocknungssektion bildet, wobei die zwei Sektionen ineinander übergehen, und wobei die Durchflußsektion in dem vertikalen Pfad des Fluidweges angeordnet ist;
c) einen zweiten Einlaß (5) zum Einführen des zweiten Trocknungsgases in die Durchflußtrocknungssektion;
d) ein gekrümmtes oder ebenes poröses Filterelement, das unterhalb des zweiten Einlasses und in der Durchflußsektion untergebracht ist zum Sammeln des versprühten Produktes, wobei das Siebelement aus der Durchflußsektion heraus bewegbar ist und die obere Oberfläche des Siebelementes parallel zur Flußrichtung des durch den zweiten Einlaß eingeführten Gases ist;
e) ein Gasauslaß zum Entfernen der verwendeten, durch das Siebelement geführten ersten und zweiten Trocknungsgase; wobei der Gasauslaß vertikal unterhalb der Durchflußsektion in Reihe mit der Sprühtrocknungssektion angeordnet ist; und
f) einen Naßreiniger zum Reinigen der durch den Gasauslaß entfernten Gase.

## Revendications

1. Procédé pour sécher des concentrés de fluides, après pulvérisation, afin de procurer une poudre, lesquels concentrés, à mesure que le séchage progresse, présentent un point dit de teneur en humidité critique CMP, celui-ci correspondant à une teneur en solides au-dessus de laquelle apparaît un "durcissement d'enveloppe" ou crémage si le séchage est trop rapide, et lesquels concentrés, pendant un séchage à certaines teneurs en solides des concentrés, subissent une dénaturation, cette dénaturation étant d'autant plus importante que la température qui se présente alors est élevée et que le temps de séjour dans cette zone est long, procédé selon lequel le fluide à sécher est pulvérisé dans un premier gaz de séchage chaud et est séché jusqu'à l'obtention, dans une première étape de séchage, d'une teneur en solides moyenne spécifique, après quoi, au moyen d'un deuxième gaz de séchage nouvellement fourni et après mélange avec le premier gaz de séchage, le séchage du produit est poursuivi dans une deuxième étape de séchage, dans laquelle le séchage est poursuivi jusqu'au point d'équilibre, une teneur en solides au-dessus de laquelle le produit ne subit pas un durcissement d'enveloppe et une dénaturation, après quoi, dans une troisième étape de séchage, facultative, le séchage de la poudre jusqu'à la teneur en humidité finale peut avoir lieu en utilisant un troisième gaz de séchage nouvellement fourni, et selon lequel le produit pulvérisé, qui parcourt tout d'abord un trajet qui est en moyenne pratiquement vertical, sous l'influence du gaz de séchage et de la pesanteur, est recueilli au bout d'un certain temps sur un élément d'écran poreux, le gaz de séchage, qui à ce moment entoure le produit, étant complètement ou essentiellement aspiré à travers l'élément d'écran et transporté jusqu'à une sortie de gaz, tandis que le produit de séchage forme une couche poreuse pendant cette opération, laquelle couche poreuse est séchée davantage par le gaz passant par la couche poreuse et l'élément d'écran, la couche poreuse étant déplacée, par déplacement de l'élément d'écran poreux, jusqu'à l'extérieur de la section à passage d'écoulement et, finalement, étant séparée de l'élément d'écran et enlevée,
dans lequel il est prévu que :
a) la température d'entrée et la quantité du premier gaz de séchage sont choisies de telle sorte que le produit à sécher acquière, comme résultat du séchage à l'aide dudit premier gaz de séchage, une teneur en humidité qui est approximativement égale au point de teneur en humidité CMP, la température d'entrée du premier gaz de séchage étant choisie à une valeur comprise entre 125°C et 750°C,
b) la température d'entrée et la quantité du premier gaz de séchage sont uniquement adaptées pour le séchage du produit jusqu'au CMP sensiblement et en sont pas adaptées pour le séchage du produit à des teneurs en humidité inférieures au CMP,
c) le premier gaz de séchage épuisé est mélangé à une quantité du deuxième gaz de séchage, qui est au plus 30 fois plus grande que la quantité de premier gaz de séchage dans une couche de mélange, située près et au-dessus de la couche poreuse sur l'élément d'écran, couche de mélange dans laquelle les deux gaz de séchage et le produit sont soumis à un mélange pratiquement complet,
d) la température sur bille humide du gaz de séchage mixte, formé du premier gaz de séchage et du deuxième gaz de séchage ajouté, est réglée aux exigences du séchage pour le produit avant des teneurs en humidité inférieures au CMP, au moyen d'une telle quantité du deuxième gaz de séchage ajouté, si bien que la température sur bille humide du gaz de séchage mixte est d'au moins 3°C et au plus 100°C inférieure à la température sur bille humide du premier gaz de séchage,
e) le séchage du produit à partir de la pulvérisation jusqu'à une teneur en solides correspondant au point d'équilibre, a lieu dans deux sections de séchage contiguës qui passent l'une dans l'autre et sont intégrées en un seul et même ensemble, lesdites sections de séchage étant une section de séchage sous pulvérisation et une section de séchage à passage d'écoulement, utilisant deux gaz de séchage spécialement adaptés aux exigences du séchage du produit dans chacune des sections, la section de séchage sous pulvérisation servant pour le séchage du produit jusqu'au CMP et la section à passage d'écoulement servant pour le séchage du produit entre le CMP et le point d'équilibre, la couche de mélange formant une partie de la section à passage d'écoulement,
f) le premier gaz de séchage se compose d'air, d'un gaz inerte ou de vapeur surchauffée, et
g) le deuxième gaz de séchage se compose d'air, d'un gaz inerte ou de vapeur surchauffée.

2. Procédé selon la revendication 1, pour la préparation, avec une consommation d'énergie réduite, de poudres à partir de concentrés de liquides, caractérisé en ce que la consommation d'énergie réduite est produite en ce que, dans la première étape de séchage, un séchage sous pulvérisation est mis en oeuvre avec un gaz de séchage approprié à cet effet et avec lequel le produit est séché pratiquement jusqu'au CMP, tandis que dans la deuxième étape de séchage, un séchage à passage d'écoulement est mis en oeuvre avec un deuxième gaz de séchage approprié à cet effet, le gaz de séchage pour la première étape n'étant pas approprié pour le séchage dans la deuxième étape, tandis que les conditions du gaz de sortie sont déterminées par le processus de séchage à passage d'écoulement dans la deuxième étape.

3. Procédé selon la revendication 1, pour la préparation de poudres, qui ne sont pas dénaturées ou sont à peine dénaturées, à partir de concentrés de fluides, caractérisé en ce que le faible degré de dénaturation résulte du fait que, dans la première étape de séchage, un séchage sous pulvérisation et mis en oeuvre avec un gaz de séchage approprié à cet effet, avec lequel le produit est séché pratiquement jusqu'au CMP, tandis que dans la deuxième étape de séchage, un séchage à passage d'écoulement a lieu avec un deuxième gaz de séchage approprié à cet effet, le séchage dans le sécheur à passage d'écoulement ses prolongeant sur une période plus longue et peut ainsi avoir lieu à une température inférieure et une teneur en humidité supérieure de l'air de séchage, tandis que le gaz de séchage pour la première étape n'est pas approprié pour le séchage dans la deuxième étape.

4. Procédé selon la revendication 1, pour la préparation de poudres cristallisées à partir de concentrés de fluides, caractérisé en ce que le degré accru de cristallisation résulte du fait que, dans la première étape, un séchage sous pulvérisation a lieu avec un gaz de séchage approprié à cet effet, avec lequel le produit est séché pratiquement jusqu'au CMP, tandis que, dans la deuxième étape, un séchage à passage d'écoulement a lieu avec un deuxième gaz de séchage approprié à cet effet, avec comme résultat que le séchage dans la deuxième étape a une basse température et une teneur en humidité élevée de l'air de séchage et sur une période plus longue, tandis que le gaz de séchage pour la première étape n'est pas approprié pour le séchage dans la deuxième étape.

5. Procédé selon la revendication 1, pour la préparation de poudres ayant une faible teneur en fines, caractérisé en ce que la teneur en fines est faible parce que, dans la première étape de séchage, un séchage sous pulvérisation a lieu avec un gaz de séchage approprié à cet effet, avec lequel le produit est séché jusqu'à une teneur en humidité pratiquement identique au CMP, tandis que, dans la deuxième étape de séchage, un séchage à passage d'écoulement a lieu avec un gaz de séchage approprié à cet effet et approprié pour sécher le produit à une vitesse lente à une température inférieure, tandis que le premier gaz de séchage n'est pas approprié pour le séchage dans la deuxième étape.

6. Procédé selon la revendication 1, pour la préparation de poudres à partir de concentrés de fluides, dans le but de former des agglomérats, caractérisé en ce que l'addition de substances à agglomérer a lieu sensiblement en même temps que l'addition du deuxième gaz de séchage dans la deuxième étape de séchage, où un séchage à passage d'écoulement a lieu avec un gaz de séchage approprié à cet effet, tandis que le concentré à pulvériser est séché, dans la première étape de séchage, dans une installation de séchage sous pulvérisation avec un premier gaz de séchage approprié à cet effet, avec lequel le produit est séché pratiquement jusqu'au CMP, tandis que le premier gaz de séchage n'est pas approprié pour le séchage dans la deuxième étape.

7. Procédé selon la revendication 1, pour la préparation de poudres ayant un volume de broyage élevé à partir de concentrés de fluides, caractérisé en ce que le volume de broyage élevé résulte du fait que, dans la première étape de séchage, un séchage sous pulvérisation a lieu avec un gaz de séchage approprié à cet effet, avec lequel le produit est séché jusqu'à une teneur en humidité pratiquement identique au CMP, tandis que, dans la deuxième étape de séchage, un séchage à passage d'écoulement a lieu avec un gaz de séchage approprié à cet effet et, par ce moyen, le séchage dans la deuxième étape est fortement modéré et, en conséquence, très peu de vacuoles peuvent se former dans le produit, avec comme résultat qu'un volume de broyage élevé est obtenu pour la poudre préparée.

8. Procédé selon la revendication 1, pour la préparation de poudres à partir de concentrés, procédé selon lequel des gaz condensables, provenant du concentré de fluide, doivent être complètement ou partiellement récupérés dans le gaz de sortie, caractérisé en ce que le gaz de sortie, constitué d'une composition des gaz de séchage épuisés issus de la première étape de séchage, de la deuxième étape de séchage, de la troisième étape de séchage facultative pour un post-séchage et d'une étape de refroidissement pour refroidir le produit, est refroidi à une basse température dans la deuxième étape de séchage et a une teneur en humidité élevée, le résultat en étant qu'il peut être refroidi de façon simple et peu coûteuse jusqu'au-dessous du point de rosée, après quoi les substances à récupérer peuvent être obtenues à partir du condensat.

9. Installation pour la mise en oeuvre du procédé selon les revendications 1 à 8, caractérisée en ce que l'installation comprend une section de séchage sous pulvérisation (3) pour pulvériser des concentrés de fluides, l'installation comprenant, en outre:
a) une première entrée (2) pour le premier gaz de séchage, la section de séchage sous pulvérisation et la première entrée étant agencées d'une façon telle que les concentrés de fluides pulvérisés parcourant un trajet qui est pratiquement vertical en moyenne;
b) une section de séchage à passage d'écoulement, qui forme un ensemble intégré avec la section de séchage sous pulvérisation, dans lequel les deux sections passent l'une dans l'autre, la section à passage d'écoulement étant placée dans le trajet vertical de déplacement de fluides;
c) une deuxième entrée (5) pour introduire le deuxième gaz de séchage dans la section de séchage à passage d'écoulement;
d) un élément d'écran poreux, incurvé ou plan, prévu en dessous de la deuxième entrée et dans la section à passage d'écoulement, pour recueillir le produit pulvérisé, l'élément d'écran étant déplaçable hors de la section à passage d'écoulement et la surface supérieure de l'élément d'écran étant parallèle à la direction d'écoulement du gaz introduit par la deuxième entrée;
e) une sortie de gaz pour éliminer le premier et le second gaz de séchage utilisés aspirés à travers l'élément d'écran et placée verticalement en dessous de la section à passage d'écoulement, à l'alignement avec la section de séchage sous pulvérisation ; et
f) un épurateur par voie humide pour purifier les gaz éliminés par la sortie de gaz.
